# EUROPEAN PATENT APPLICATION

(11) **EP 1 659 329 A1**
(43) Date of publication of application: **24.05.2006**
(21) Application number: 04106002.1
(22) Date of filing: 23.11.2004
(51) Int. Cl.: F16L 59/18, F16L 15/04, F24H 9/12

(54) **Method and device for eliminating corrosion at connection ends of heating installations, particularly aluminum panel radiators**

(71) Applicant: Fenis Teknik Ürünler A.S., 41400 Istanbul (TR)
(72) Inventor: ULUDEVECI, Mehmet Fenis Teknik Ürünler A.S., Gebze-Kocaeli 41400 Istanbul (TR)
(74) Representative: Sevinç, Erkan

(57) **Abstract**

A fitting element for connecting two parts of a heating installation particularly an aluminum panel radiator to a heating line in which a heating fluid circulates. The fitting device comprises a threaded part having threads for fitting a heating line or a control valve to a heating element such as aluminum panel radiators, solar heat collectors, boilers, circulating pumps, domestic heating devices etc. The threaded portion of the externally threaded fitting element is provided with at least one o-ring at its both ends. Contact of the circulating fluid at threaded regions of the inlet/outlet ends of the heating device is prevented in order to eliminate galvanic or chemical corrosion.

## Description

### Technical Field of the Invention

The present invention relates to a method and device for eliminating corrosion at connections ends of heating installations such as aluminum panel radiators, solar heat collectors, boilers, circulating pumps, domestic heating devices etc. through use of a fitting element screwed into the inlet and/or outlet ends of said heating devices. The fitting element prevents liquid contact within the internally threaded regions of metallic surfaces. As the process of machining threads removes corrosion preventive coating on the metallic surfaces to which cut off valves are attached, the fitting element prevents any possible chemical or galvanic corrosion in the non-coated or physically weak notches at those surfaces.

### Background of the Invention / Prior Art

The present invention relates to a fitting element, particularly for aluminum panel radiators, for preventing types of corrosion in the inlet and outlet ends of heating devices. As the heating/cooling fluid travels through body of a heat exchanger, it creates electrolytic mediums at parts having potentially different contacting metals, such as fittings in the inlet and outlet ends of a panel radiator. It is known inn the art that these parts corrode in time. After a period of use, undesirable fluid leakages around weak parts such as inlet and outlet ends of radiators are observed quite often irrespective of whether the producer have used high quality or thick profiles in manufacturing.

Various fitting devices, which are basically aiming to provide easily mountable sealed fitting structures for preventing water leakage are disclosed in the prior art. However, the general conceptual designs of those fitting parts are focused on their leakage preventing and practical usage properties but not to preventing chemical or galvanic corrosion in fitting structures comprising more than one type of metals.

DE 37 26 218 describes a coupling piece for connecting any heater device to a water-outlet socket wherein said piece refines gradually and comprises grooved parts to bear sealing components in order to achieve plug-in connection on the heating device. As the connection is intended for a plug-in application, the piece disclosed by this document has no particular relevance to commercial panel radiators which require threaded connection in the valve ends.

Similarly DE 196 03 398 discloses a plug-in type-coupling piece having two O-rings set into square section grooves in the end surface and an additional clamping ring for securing the same in the pipe socket whereby a complete sealing is provided with the plug-in structure.

DE 42 05 539 describes a plug coupling designed for connecting radiators to fluid flow controlling valves by means of a plug-in structure, which accommodates sealing rings and an additional elastic clamping ring enclosing the pipe end. Furthermore, said clamping ring of the structure comprises claws having the functionality of engaging in the pipe wall and securing the same against removal.

In accordance with the experiences of the producers and the prior art, heating installations which are based on fully metallic threaded fittings do not provide effective solutions for avoiding chemical and/or galvanic corrosion problems faced during lifetime of the heating device. The present invention proposes a method and device for eliminating chemical and/or galvanic corrosion on the inlet and outlet connection parts of fluid based heating installations e.g. aluminum panel radiators, through use of a fitting comprising at least one O-ring at the end point of its threaded portion. Furthermore, an O-ring at the back yard of the threaded portion and an O-ring in the inlet of the said device are located for complete sealing. The protective coating layer inside a panel radiator is damaged whilst milling or machining threads at inlet and outlet portions of the heating device. These portions become unprotected against types of corrosion upon coming into contact with a heating fluid such as water. A first o-ring located in front of the threaded portion prevents fluid contact throughout the threaded portion of the fitting device and provides elimination of corrosion throughout the corresponding portions of the heating element, e.g. a panel radiator or a solar collector.

### Objects of the Invention

One of the objects of the present invention is to provide method for eliminating corrosion at connection ends of heating installations, particularly aluminum panel radiators.

A further object of the present invention is to provide a fitting element, which eliminates chemical and galvanic corrosion at connection ends of heating installations such as panel radiators, solar heat collectors, boilers, circulating pumps, domestic heating devices.

Still a further object of the present invention is to provide a fitting device for connecting the inlet and outlet ends of the aluminum panel radiators to the flow controlling valves and/or the fluid installations particularly in the presence of bimetallic parts at threaded connections.

### Summary of the Invention

The objects of the invention are achieved through use of a fitting device (20), designed for connecting the open ends of the heating devices; particularly aluminum panel radiators, to flow control valves and/or fluid installations while protecting the threaded fitting portions (12) against chemical and galvanic corrosion and erosion.

Most conventional radiators have threaded portions in the open ends in which the valves or heat pipes are fixedly attached by screwing with a complete sealing. During the threading operation, anti-corrosion coating is damaged and threaded portions are physically weakened. Consequently, many radiators are reported to leak in result of corrosion in the inlet or outlet ends. Corrosion in the threaded seat extremely accelerates in case of bimetallic fixation portions where an amount of potential difference is created by the potentially different metals. The galvanic corrosion caused by the driving force of the bimetallic contacts occurs in an electrolyte fluid, in this case circulating fluid of the heating installation.

The present invention solves the above-mentioned problem by preventing contact of the circulating fluid with the non-coated (or coating removed) threaded surfaces of the heating element through use of a sealing o-ring (30) located between the fluid circulation channel (11) and the threaded portion (22) and fixed in a groove. Furthermore, an o-ring (31) back in the threaded portion (22) and another o-ring (32) into the pipe connection circle (24) are placed for providing complete sealing in connection ends of the device (20). All of the o-rings are accommodated in o-ring receiving grooves for being secured.

Consequently, the front O-ring (30) in the fixing device (20) plays the key role in preventing the fluid contact in the non-resistant portions of the heating installations.

The fitting element (20) proposed herewith can be used in wide ranges of applications such as radiators, boilers, solar heat collectors etc.

### Brief Description of the Figures

Accompanying figures are given solely for the purpose of schematically exemplifying the principles of the present invention.

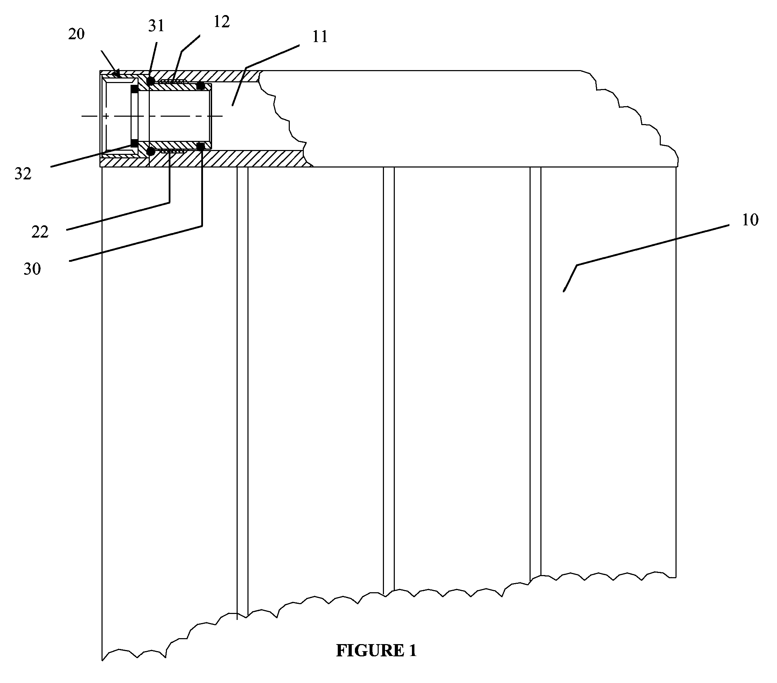

Figure 1 is schematic demonstration of an assembly of the fitting element (20) screwed in an inlet end of a panel radiator (10) and accompanied therein.

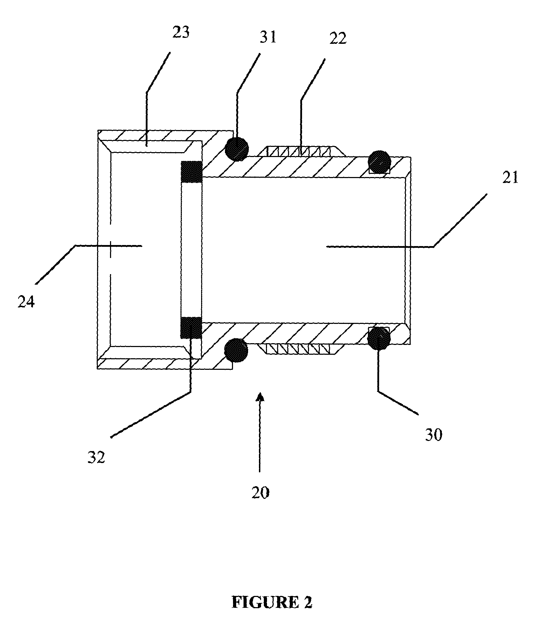

Figure 2 is a schematic 2-dimensional demonstration of the fitting element (20), which provides an assembly for connecting an open end of a radiator (10) to an external valve or a heating line.

### Detailed Description of the Invention

Corrosion is a frequently faced problem in heating installations having a circulating heating fluid such as conventional central heating installations. Bimetallic structures designed for connecting two or more elements are likely to corrode due to the fact that fitting parts are subject to fluid mediums in which physical and chemical corrosive effects appear immediately after contact with the circulating fluid, generally water. Galvanic corrosion is particularly seen in bimetallic systems where electrical current is formed as different metals create a potential difference due to different natural potentials thereof. In case an ionic aqueous solution gets in contact with both metals, an electrical current is easily created which flows from the cathode through the anode where the cathode is higher potential metal whilst the anode is the lower potential corroding metal.

Heating installations, particularly central heating devices suffer corrosion related problems very often particularly at around fitting portions e.g. as in the case of valve connection ends of aluminum panel radiators. The open end portions of the radiators where inlet and outlet lines are conducted from one system to another, are under threat of corrosive effects rather than other portions of the system as galvanic reactions occur as per mentioned above in those bimetallic portions. Consequently, liquid leakages out of the circulation systems are observed very often before the end of guaranteed service life.

Each metal in the nature have various potentials according to which they are classified as electrochemically more or less noble. Metals having higher natural potentials are designated as nobler while the ones having lower potential are more active. In accordance with this definition, the more the metal is noble, the more it is resistant to corrosion. When two different metals are brought into contact in an ionic solution, the anodic metal which has the lower natural potential begins to be consumed continuously due to the fact that said metal releases electrons through the electrolyte solution because of the potential difference. Released electrons are carried to the cathode metal side to form a continuous current. Harder liquids containing much more ions in the circulation system greatly enhances the rate of current, in other words rate of corrosion increases in the corroding metal unless the electron carrier electrolyte solution is not removed from the medium.

Electrical potentials of the metals in various electrolytes are given in the literature in order to allow them to be classified according to their electrochemical activities. Such a classification according to the natural potentials of a number of metals is exemplified in Table1 below:

**Table 1.**

| **MATERIAL** | **VOLTS** |
|---|---|
| Magnesium | -1,60 |
| Zinc | -1,00 |
| Aluminum | -0,95 |
| Steel | -0,60 |
| Brass | -0,35 |
| Copper | -0,30 |
| Lead | -0,20 |
| Titanium | 0,10 |

The natural potentials of the metals given in the Table 1 are the average values measured in seawater electrolyte medium, which includes high amount of salt and minerals in ionic form. The potentials given in volts for each metal surely varies depending on many parameters such as the electrolyte solution, the number of free ions in the medium, temperature, pH etc. Activity of the metals increases as moving upwardly on the table while nobility increases in downward direction. Potential difference between two contacting metals, which is mainly the driving force in electron transfer, greatly affects the rate of corrosion.

Considering aluminum panel radiators, when a relatively noble metal such as lead, copper or brass is introduced somewhere in the radiator structure, aluminum parts immediately starts to corrode when a circulating electrolyte fluid is introduced into the installation. Fitting portions of aluminum radiators are extremely volatile for all kinds of corrosion. Open ends of the radiators are connected to the heating lines with connection fittings, which are generally made of a different metal.

Aluminum panel radiators are mostly coated with a protective chromate film layer and coated with powder paint thereafter. These precautions successively protect the streamlines of the radiator from corrosion caused by the circulating fluid except the open-end connection portions. These portions are milled to connect the heating installation or a cutoff valve to the inlet or outlet of the radiator. The protective layers are removed when internally machining threads on the inlet and/or outlet ends of the heating elements. Any fluid contact to weakened portions easily starts the galvanic corrosion, which latterly causes fluid leakages out of the element.

The fitting device (20) disclosed with the present invention prevents any fluid contact throughout the threaded bimetallic contact portions by means of an o-ring (30) located on an o-ring receiving groove. The channel (11), in which the circulating fluid such as water circulates, is resistant to corrosion due to the protective coating layers of chromate. However, the aluminum side of the threaded portions (12) in the open ends is not resistant at all due to the fact that threading operation to form threads causes the protective layers to be removed off the surface. When the fitting device is brought in contact with the threaded aluminum side (12), galvanic corrosion starts immediately due to formation of a difference in potentials of both metals only if an electrolyte fluid is introduced to the medium. The o-ring (30) located between the threaded portion (22) and the circulating fluid plays the key role to prohibit any possible galvanic circuit formation keeping them separate. Corrosion is inhibited as the electrolytic circulating fluid is not allowed to contact with the threaded portions (12, 22).

Fitting device (20) basically has two main fluid passage chambers (21, 24), one (24) of which is internally threaded whereas the other (21) is externally. The threaded portion (22) is screwed into the radiator open ends while the other threaded portion (23) connects to the fluid line, mostly by a valve, located between the heating installation and the radiator (10). The present device (20) comprises at least one o-ring located in the front end between the circulation channel side (11) and the threaded portion (22). Threaded portion (22) is screwed and fixedly attached to the open-end portions of aluminum structure of the radiator (10). An additional o-ring (31) is located in the back side of the threaded portion in order to provide complete sealing against leakage outside the circulation system. Inner surface of the connection part (24) to heat line is threaded as well for being screwed and fixedly attached to the heating line. Another o-ring (32) is located in this connection part (24), which also seals and prevents any leakage outside the radiator (10).

In an example, an aluminum panel radiator is connected to a heating installation in which a fluid circulates at high temperature. Circulating fluid is domestic water containing various minerals and ions such as Mg²⁺, Ca²⁺, Na⁺ and Cl⁻. Open end inlet and outlet parts of the radiator are to be connected to flow control valves via fitting elements where the control valves are connected to the heating pipeline from one side and connected to the fitting device from the other side. Fitting device is made of brass material, which is highly resistant to corrosion. One threaded portion of the fitting device is screwed to the open-end aluminum structure of the radiator while the other threaded side is screwed to the control valve. Here the approximate potentials of each metal are to be considered according to Table 1:
V (Brass) = -0,35 Volt
V (Aluminum) = -0,95 Volt
Therefore; Galvanic Potential Difference = -0,35 - (-0,95)
= 0,60 Volt
which is a relatively big driving force for the formation of an electrical current. An O-ring is accommodated between the water side and the threaded portion, which doesn't allow the water or moisture penetration to the milled portion. Laminar or turbulent flow regimes do not affect the level of protection. Two more O-rings are located on the fitting element for sealing. No traces of corrosion were visualized after 3 months operation as the circulating fluid was not allowed to contact threaded portions of the fitting element.

The fitting element (20) disclosed with the present invention provides perfect protection of the threaded portions (12) of the heat installations without being limited by any physical or chemical parameter such as temperature, pressure, flow regime, construction material, type of the circulating fluid, amount of ions in the circulating fluid, pH etc. Long life endurance and operation advantages are provided.

## Claims

1. A fitting element (20) for connecting a heating device to a heating installation in which a heating fluid circulates, the fitting element (20) comprising an externally threaded portion (22) and an internally threaded portion (23) **characterized in that** said fitting element comprises at least one first o-ring (30) located in a groove which is in front of said threaded portion (22), and at least one second o-ring (31) located in a groove which is rear part of said threaded portion (22) whereby the circulating fluid is prevented from contacting the threaded ends of the heating device for eliminating corrosion on said threaded ends.

2. A fitting element (20) according to Claim 1 wherein the fitting element further comprises at least one third o-ring (32) for preventing leakage on the heating installation side.

3. A fitting element (20) according to Claim 1 wherein the o-rings are made of an elastic material, particularly of rubber.

4. An aluminum panel radiator comprising a fitting element (20) according to Claim 1.

5. A solar collector having a heat exchanger made of aluminum material and provided with a fitting element (20) according to Claim 1.

6. A method of connecting an heating device to a heating installation in which a heating fluid circulates, the method comprising the steps of providing a heating device which has internally threaded inlet/outlet ends with an externally threaded fitting element (20) whose threaded portion is provided with at least one o-ring (30, 31) at its both ends whereby contact of the circulating fluid at threaded regions of the inlet/outlet ends is prevented to eliminate corrosion.
